# EUROPEAN PATENT APPLICATION

(11) **EP 2 902 146 A1**
(43) Date of publication of application: **05.08.2015**
(21) Application number: 14400008.0
(22) Date of filing: 04.02.2014
(51) Int. Cl.: B23K 1/00

(54) **Procedure and apparatus for joining anneal resistant metal components**

(71) Applicant: Aurubis AG, 20539 Hamburg (DE)
(72) Inventor: Anders, Falkenö, 72348 Västeras (SE); Gorka, Mugarra, 300271 Dagang Tianjin (CN)
(74) Representative: Patentanwälte Klickow & Partner Partnerschaftsgesellschaft mbB

(57) **Abstract**

The procedure and the apparatus are used for joining anneal resistant metal components, especially components made of copper or brass. A brazing paste is applied of at least a surface to one of the components. There is used a header plate as one of the components. The header plate is prebrazed prior to a punching of the header holes.

## Description

The invention relates to a procedure for joining anneal resistant metal components, especially components made of copper or brass, where a brazing paste is applied to at least a surface of one of the components.

Additionally the invention is directed to an apparatus for joining anneal resistant metal components, especially components made of copper or brass, where a brazing paste is applied to at least a surface of one of the components.

It is an object of the invention to improve the above referenced procedure to guaranty a leak free connection of the metal components.

According to the prior art it is already known to manufacture heat exchangers made of copper or brass. Such heat exchangers are often equipped with header plates. The header plates are equipped with a great number of header holes to enable tubes to be inserted. To enable a good function of the heat exchangers it is necessary to manufacture joints between the tubes and the header plate leak free. In general the joints between the tubes and the header plate are manufactured by brazing.

Especially dedicated slurry which is a type of brazing paste is used for the joints. The slurry is a mix of powder, binder, solvent and flux. The slurry can be applied by pouring, spraying or dispensing. A small amount of noncorrosive flux is often utilized to make the process more forgiving, when oxidized and/or dirty components are used.

By the above referenced brazed connection there is formed an intermetallic joint between the tube and the header. For example there is used a tube made of brass and a header made of brass.

Typically the slurry paste is applied to the air side of the header.

For low volume production lines it is already known to apply manually the header slurry. For mid to high volume production the process can be automated.

To support the production process the slurry paste is dried after applying to evaporate the solvent.

To guaranty a leak free joint it is necessary to provide a sufficient quantity of molten filler metal to fill the entire gap. According to known prior art it is not possible to guarantee a correct quantity of braze filler material at all locations to provide a sealed gap after brazing.

A special object of the present invention is directed to joining anneal resistant copper and brass components. Such components are for example tubes, fins, headers, side supports or tanks. It is preferred to realize the joining at 650 degC in an inert atmosphere. Such an atmosphere is typically nitrogen and below 50 PPM of oxygen.

As a preferred object of the present invention it is intended to utilize the described manufacturing process to produce radiators, charge-air-coolers, oil coolers, heaters or other heat exchanger cores.

A further object of the present invention is to use a special brazing filler metal. This metal belongs to the CuSnNiP-system. The filler metal is utilized to join tube-to-fins, tube-to-headers or headers-to-tanks.

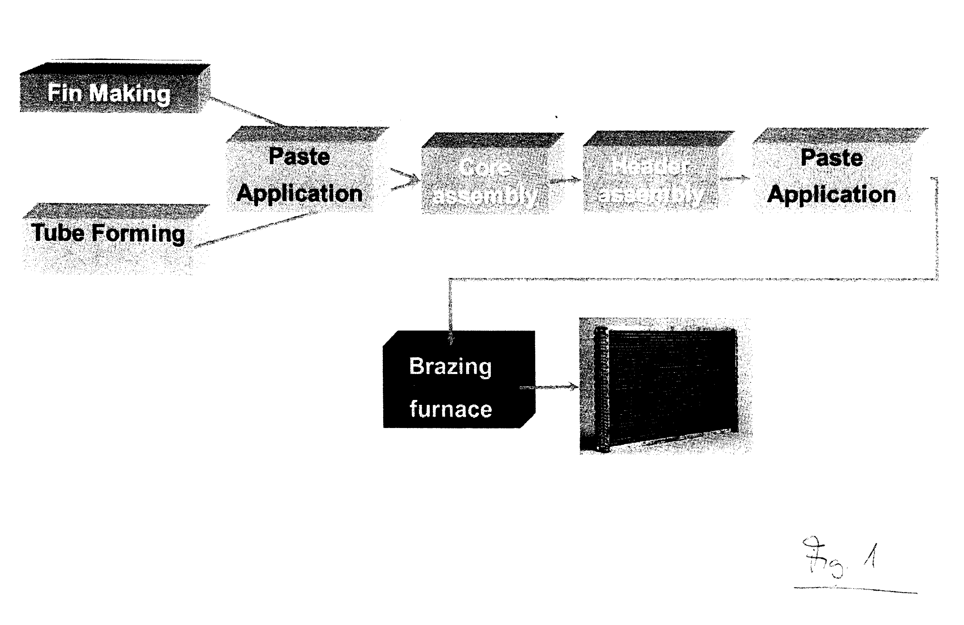

Preferred embodiments without any restriction to realize the present invention are described in the following drawings. A short description of the drawings follows.
- Figure 1: A block diagram with regard to a procedure of prior art,
- Figure 2: a photo illustrating a brazing filler alloy which is gas atomized to a spherical powder,
- Figure 3: a photo illustrating tolerance requirements for tube-to-header brazing,
- Figure 4: coated and pre-brazed header plates,
- Figure 5: header holes in a close up,
- Figure 6: a header after brazing from the air-side where the holes are punched,
- Figure 7: a picture showing the pull through of the molten braze filler metal from the coating through the flanges of the punched hole,
- Figure 8: a picture from the coated air-side with perfect fillets around the tubes,
- Figure 9: a cross section of the tube header interface,

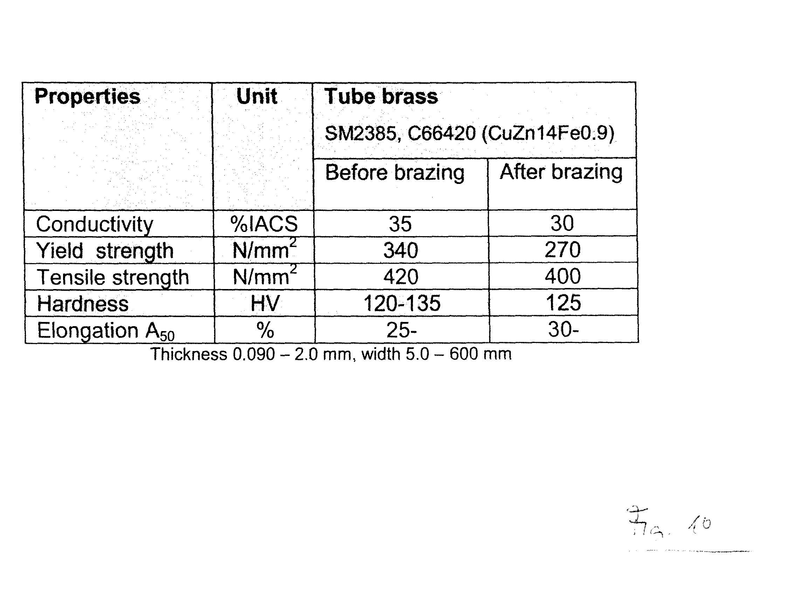

- Figure 10: a list with regard to characteristics of the tubes material SM2385,

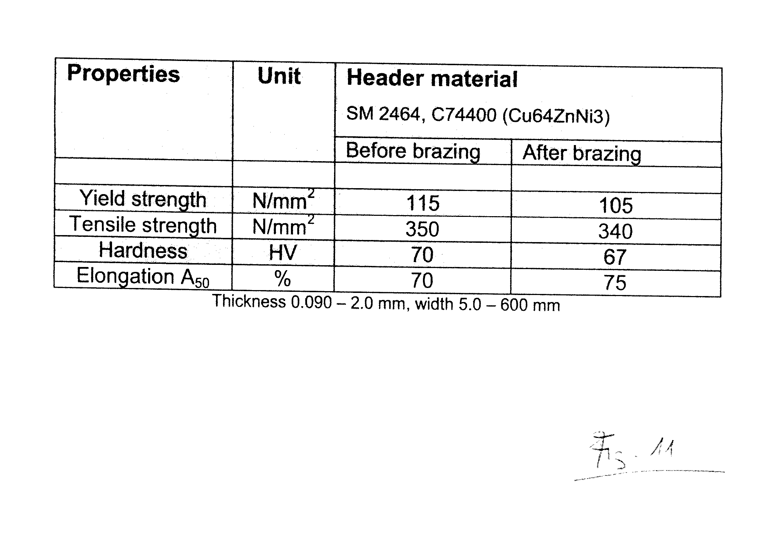

- Figure 11: a list with regard to characteristics of a header brass material SM2464,

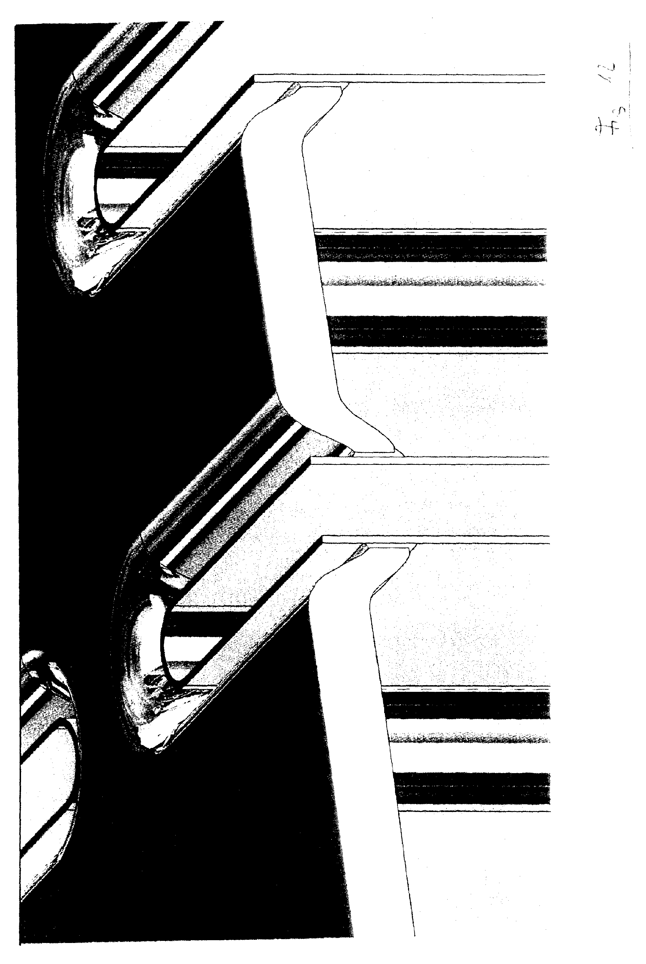

- Figure 12: a cross section of a successfully brazed tube-to-header joint.
According to figure 1 there is illustrated that in two separate steps there is proceeded the fin making and the tube forming. In a common second step there is realized the paste application and then first the core assembly and then the header assembly. After the paste application there is realized brazing the furnace to provide the final cooler element.

An important result of the application of the present invention is to realize a tube-to-header joint which is leak free. To guarantee this characteristic there is provided a sufficient quantity of molten brazed filler metal to fill the entire gap. According to a preferred example of the present invention a dedicated slurry is used for the tube-to-header joints. Such a dedicated slurry maybe a type of brazing paste. The slurry is a mix of powder, binder, solvent and flux. The slurry can be applied by pouring, spraying or dispensing. A small amount of noncorrosive flux if often utilized to make the process more forgiving, when oxidized and/or dirty components are used.

According to the described procedure there is realized a brazed connection, especially an intermetallic joint. The connection is formed between a braze tube and a brass header. For example the braze tube maybe manufactured by the alloy SM2385 and CuZn14Fe0.9.

The brass header maybe manufactured by the alloy SM2464 and Cu64ZnNi3.

According to a preferred embodiment of the invention the slurry paste is applied to the air-side of the header.

According to another preferred embodiment there is used an amount of paste of 0,5 g dry weight per tube end for 16 mm wide tubes. According to another preferred embodiment there is used an amount of paste of 1,8 g per tube and for 60 mm wide tubes.

The procedure according to the present invention maybe used for low-volume production lines as well as for mid-to-high volume production lines. For low-volume production lines the header slurry can be applied manually. For mid-to-high volume production lines the process can be realized automatically.

It is preferred to dry the slurry paste after applying to evaporate the solvent.

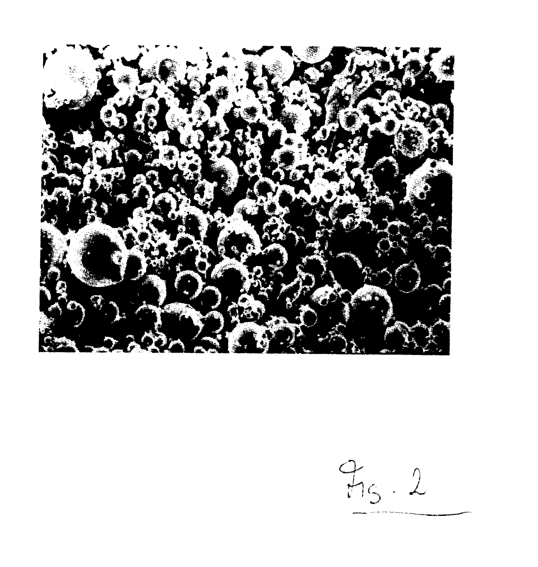

Figure 2 is illustrating a preferred embodiment of the filler metal. The content of tin (Sn) is 15%, the content of nickel (Ni) is 4%, the content of phosphorous (P) is 5% and copper (Cu) is used for balance.

The brazing filler alloy is preferred gas atomized to a spherical powder. The particle size is less than 90 µm. The average particle size is 15 to 30 µm depending on source. For example the brazing filler material has the characteristics that the melting temperature is 600°C and that the melting range is 10°C. The brazing filler material which characteristics have been described above is made of a special powder composition with flux and binder. The composition does depend on the special application requirements. For example the composition does depend on the tube-to-header and the tube-to-fins. Especially the melting of the brazing filler alloy starts at 600 °C.

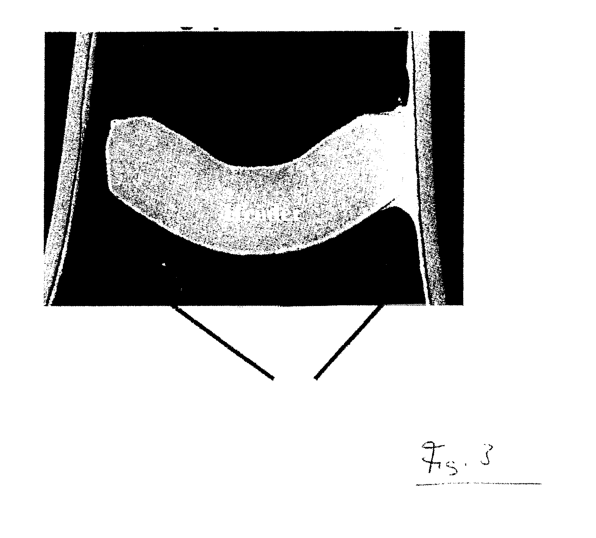

According to figure 3 there are illustrated tube walls and a header. In the right part of the drawing there is realized a good joint and in the left part there is realized a too wide gap. It is intended to realize a maximum gap of 0,10 mm. And optimal gap is 0,05 mm.

According to the present invention the heat exchanger core brazing is typically done on a horizontal brazing position. It has been found that the result of the brazed tube-to-header joints is heavily influenced by the quality of the surface of the base-metal as well as of the powder quality and the gap clearance. The tolerances and cleanliness of the contact surface area are of utmost importance. This is a consequence of the fact that this area draws the braze alloy from the surface of the header into the joint by capillary action.

It would be advantages when applying slurry paste to control that the amount of brazing paste is in the correct amount and in all locations. Especially it is intended that the brazing alloy is only in the joint area formed between tubes and headers.

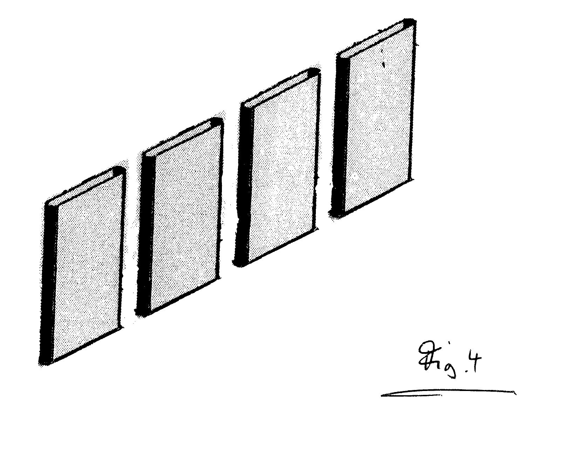

Figure 4 is illustrating that the blank header plates are cleaned and sprayed with header paste corresponding to 150 to 500 g per square meter on one side. For example there is used a brazed alloy SM2464.

The paste can be applied with various techniques. Preferred is paste spraying or a roller coating process. The spraying could be realized by a pneumatic gun. When using a roller coating process as a result the paste is picked up as a thin layer on the steel roll.

After applying the paste the header plates are dried either with hot air or infrared light to remove the solvent. The next step is the pre-brazing in the brazing furnace. After effecting this step there is only the filler metal surface on the surface on the brass header plate.

A similar application technique could be utilized to apply the brazing paste on the tube surface for the tube-to-fin brazing.

In a next step it is preferred to clean the surface of any residues caused by flux or binder during the pre-brazing process. This cleaning step can be done by water and brush. As a result there is realized a shiny surface of the filler metal.

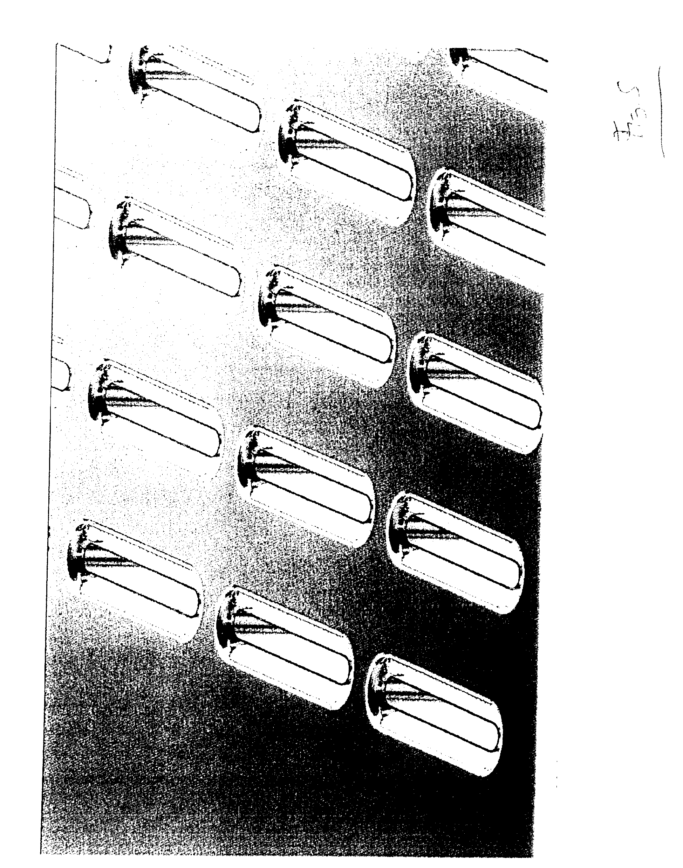

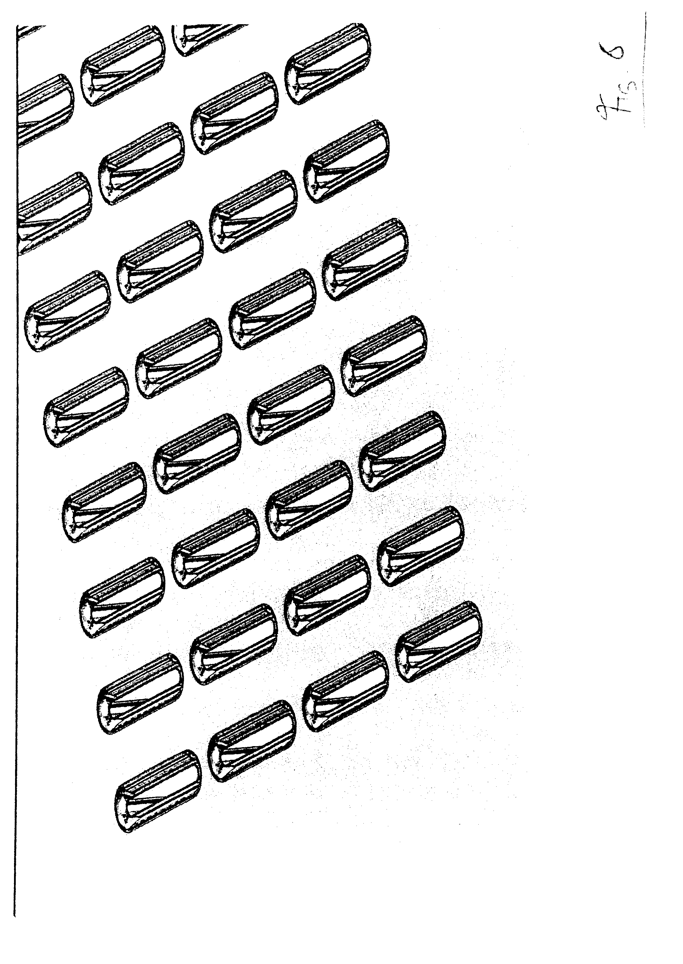

According to figure 5 and figure 6 holes for tubes are punched from the coated side and so the coated clad material on the flanged part will come into contact with the tube ends.

This procedure step brings the coating or filler metal exactly where it should be for a successful brazing. Figure 6 shows the header after brazing from the air-side from where the holes are punched. Cut off tubes are visible in the header.

In figure 5 there are illustrated the header holes in a close up.

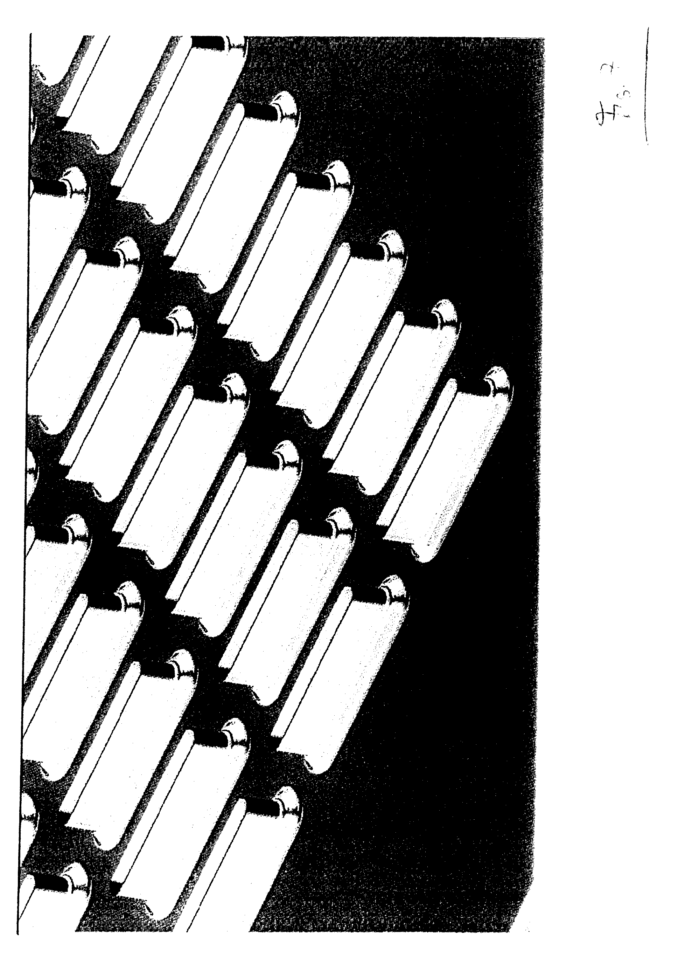

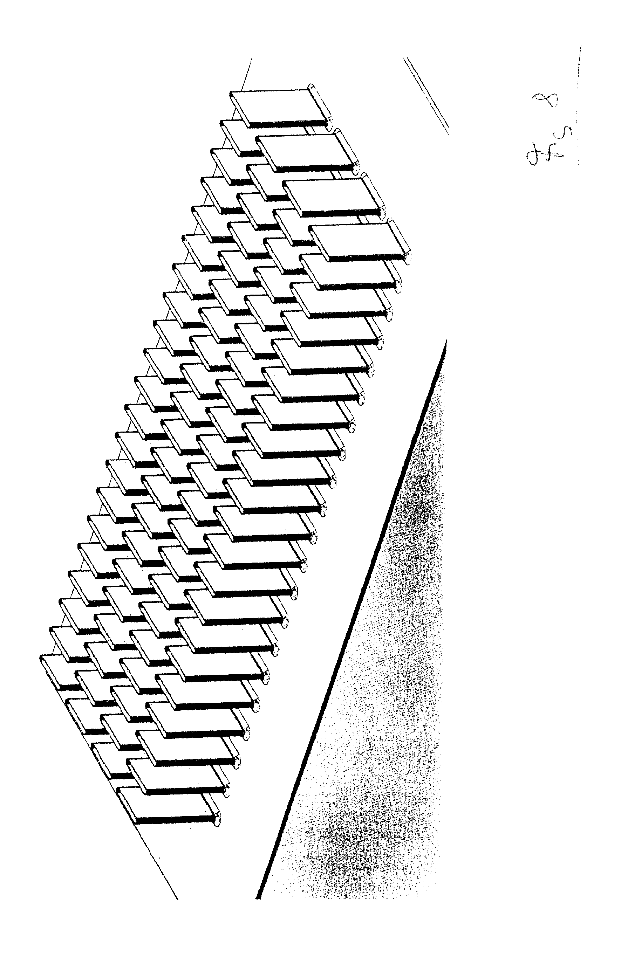

Figure 7 and figure 8 are illustrating the results of the next procedure step. After assembling a core with the pre brazed headers the coated area should be sprayed with noncorrosive flux which has the working temperature in the same range as the brazing paste. A flux is utilized to improve the brazing result. The brazed result is illustrated in figure 7 and figure 8. Figure 8 shows a view from the coated air-side with perfect fillets around the tubes. Figure 7 is illustrating the pull through of the molten braze filler metal from the coating through the flanges of the punched hole and forming a solid joint also there.

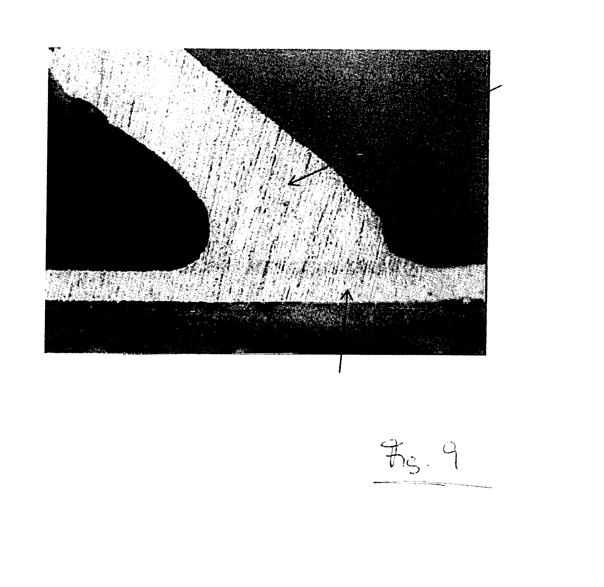

Figure 9 shows a cross section of the tube to header interface.

According to the described process there is realized a solid homogeneous braze filler layer which is in contact with the tube surface after hole punching and insertion of the tube-to-header. So according to the present invention the filler metal is just where it needs to be.

According to the present invention it is easy to control the brazing paste amount and location of the brazing paste in comparison with the current techniques of prior art.

The process according to the present invention simplifies the manufacturing process and there is no need for tube-to-header external coating.

It is an object of the present invention to improve the reliability of tube-to-header brazing leading to small amount of post-brazing steps.

It is a further object of the present invention to improve the productivity and cost effectiveness of the overall manufacturing process.

As already mentioned it is possible to use a roller coating machine according to the present invention. For example such a roller coating machine could be used for work piece dimensions from 115 mm length/diameter. A maximum coating width is 2300 mm and the work piece thickness is in the range of 0, 1 mm to 80 mm.

A preferred coating thickness is in the range of 4 µm to 80 µm.

## Claims

1. Procedure for joining anneal resistant metal components, especially components made of copper or brass, where a brazing paste is applied to at least a surface of one of the components, **characterized by** using a header plate as one of these components and pre-brazing the header plates prior to the a punching of header holes.

2. Procedure according to claim 1, **characterized by** using an inert atmosphere when joining the metal components.

3. Procedure according to claim 1 or 2, **characterized by** using a filler material that contains copper, tin, nickel and phosphorous.

4. Procedure according to one of the claims 1 to 3, **characterized by** connecting tubes to regions of the holes.

5. Procedure according to at least one of the claims 1 to 4, **characterized by** using the header plates for heat exchangers.

6. Procedure according to at least one of the claims 1 to 5, **characterized by** the procedure steps of first cleaning the surface of the header plates and then applying the brazing paste.

7. Procedure according to claim 6, **characterized by** spraying the brazing paste.

8. Procedure according to at least one of the claims 1 to 6, **characterized by** applying the brazing paste by rolling.

9. Procedure according to at least one of the claims 1 to 8, **characterized by** drying the surface when the brazing paste is applied.

10. Apparatus for joining anneal resistant metal components, especially components made of copper or brass, where a brazing paste is applied to at least a surface of one of the components, **characterized by** using a header plate as one of this components and pre-brazing the header plates prior to the a punching of header holes.
